Europäisches Patentamt

European Patent Office

Office européen des brevets

(11) Publication number: **0 447 390 B1**

# EUROPEAN PATENT SPECIFICATION

(45) Date of publication of patent specification: **02.02.94**   (51) Int. Cl.⁵: **C04B 35/44**, F41F 3/04, H01Q 1/42

(21) Application number: **88908431.5**

(22) Date of filing: **04.05.88**

(86) International application number:
**PCT/US88/01496**

(87) International publication number:
**WO 88/08829 (17.11.88 88/25)**

(54) **TRANSPARENT POLYCRYSTALLINE BODY WITH HIGH ULTRAVIOLET TRANSMITTANCE, PROCESS FOR MAKING, AND APPLICATIONS THEREOF.**

(30) Priority: **05.05.87 US 47403**
**05.05.87 US 47422**
**05.05.87 US 47428**

(43) Date of publication of application:
**25.09.91 Bulletin 91/39**

(45) Publication of the grant of the patent:
**02.02.94 Bulletin 94/05**

(84) Designated Contracting States:
**AT BE CH DE FR GB IT LI LU NL SE**

(56) References cited:
| | |
|---|---|
| DE-A- 3 319 346 | US-A- 531 308 |
| US-A- 3 530 209 | US-A- 3 768 990 |
| US-A- 3 875 277 | US-A- 3 950 504 |
| US-A- 3 974 249 | US-A- 4 171 400 |
| US-A- 4 273 587 | US-A- 4 543 346 |
| US-A- 4 584 151 | |

(73) Proprietor: **COORS PORCELAIN COMPANY dba COORS CERAMICS COMPANY**
**17750 West 32nd Avenue**
**Golden CO 80401(US)**

(72) Inventor: **ROY, Donald, W.**
**475 Colorow Road**
**Golden, CO 80401(US)**
Inventor: **HASTERT, James, L.**
**12275 West Tenessee Place**
**Lakewood, CO 80228(US)**
Inventor: **COUBROUGH, Lawrence, E.**
**8050 A Garrison Court**
**Arvada, CO 80005(US)**
Inventor: **GREEN, Kenneth, Edward**
**6139 Routt Street**
**Arvada, CO 80004(US)**
Inventor: **TRUJILLO, Aurelio**
**6588 Estes Street**
**Arvada, CO 80004(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.0 9/3.3.3)

**CERAMIC ENGINEERING AND SCIENCE PRO-CEEDINGS, vol. 4, nos. 7/8, July-August 1983, pages 502-509, Columbus, Ohio, US; D.W. ROY et al.: "Polycrystalline mgA12O4 spinel for high temperature windows"**

**AMERICAN CERAMIC STY BULLETIN, vol. 60, no. 9, September 1981, pages 906-909, Columbus, Ohio, US; R.L. GENTILMAN: "Fusion-casting of transparent spinel"**

**CHEMICAL ABSTRACTS, vol 87, no. 2, 11th July 1977, page 286, abstract no. 10296m, Columbus, Ohio, US; K HAMANO et al.: "Fabrication of transparent spinel ceramics by reactive hot-pressing", & YOGYO KYOKAI SHI 1977, 85(5), 225-30**

(74) Representative: **Thomas, Roger Tamlyn et al**
 **D. Young & Co.**
 **21 New Fetter Lane**
 **London EC4A 1DA (GB)**

**Description**

This invention relates to transparent polycrystalline bodies of sintered magnesia-alumina spinel having high transmittance of ultraviolet light, a process for the manufacture thereof, and articles, e.g. missile guidance domes and missile launch tube windows fabricated therefrom.

In a number of applications, e.g. in missile guidance domes and windows for missile launch tubes, there is a need for a strong, tough, transparent window material having a high transmissivity throughout a wide range of electromagnetic radiation.

Previous materials and methods for production of sintered transparent bodies for such purposes have suffered from a number of difficulties. In particular, many previous materials have been deficient in transmittance at certain wavelengths of the electromagnetic spectrum, and especially wavelengths in the range 0.2 micrometers (microns) to 0.4 micrometers (microns), i.e. ultraviolet wavelengths, as well as visible and infrared wavelengths up to about 6 micrometers (microns).

Previous materials also tend to be susceptible to abrasion or erosion, for example, from high velocity impaction of dust or sand particles or rain or cloud droplets.

Previous materials are also often unstable under conditions of long exposure to ultraviolet light, such that exposure to sunlight or to ultraviolet light with an intensity of about 700 microwatts/cm , on the order of 0.25 hours or more caused a reduction of the transmittance properties of the material.

Other previous materials lack the desired structural strength. For example, in some applications a transparent window is required which can withstand mechanical stresses of upto about 0.1 MPa (15 psi) but which, nevertheless, will still rupture when subjected to pressures of 0.17 MPa (25 psi) or more.

Certain previous materials, e.g. MgO, are hygroscopic and become cloudy upon exposure to moisture, rendering the optical qualities of the material unacceptable.

$MgF_2$ which has a degree of transmittance in the infrared region, such as the region between 3 and 5 microns, has also been used in such applications, but is deficient in its transmittance of other wavelengths. The mechanical properties of $MgF_2$ are also insufficient for a number of purposes. For example, $MgF_2$ has a Knoop hardness of about 5650 MPa (576 kg mm$^{-2}$) and a flexural strength of about 86.0 MPa (12.5 kpsi).

Missile launch tube windows have an additional constraint in that the launch tube window should have sufficient strength and hardness to retain its integrity and transparency during ordinary storage and transport conditions, but which will rupture at a desired overpressure level, so that the window will disintegrate during launch of the missile.

In other aspects previous production methods have been costly to practice and have required a number of difficult steps making the windows impractical to produce in quantity.

Amongst some of the most suitable materials for the above described purposes are the polycrystalline magnesia-alumina spinels, as taught, for example, in US-A-4543346, and also in Ceramic Engineering and Science Proceedings, Vol 4, Nos 7/8, July-August 1883, pp 502-509, and in American Ceramic Society Bulletin, Vol 60, No 9, 1981, pp 906-909, and whilst these material do have many desirable properties, improvements can still be made especially with reference to the provision of a material for launch tube windows or missile domes which is stable under conditions of high temperature and in corrosive environments, such as oxidizing environments, or acidic environments, which is substantially insoluble in water, which can be polished to a high degree of polish, which is stable under prolonged exposure to ultraviolet light, and which is resistant to abrasion or erosion, particularly when subjected to dust, sand, or water droplets at a velocity of about 500 meters per second, and which have high transmittance of ultraviolet light.

Accordingly, a number of advantages would be realized by methods and materials for producing a transparent window having high transmissivity, particularly in the ultraviolet spectral region, as well as in the infrared region (e.g. about 3 to 5 micrometers), high resistance to erosion, abrasion or thermal or chemical degradation, elevated strength and hardness characteristics, low susceptibility to deterioration from ultraviolet light, low cost and ease of manufacture.

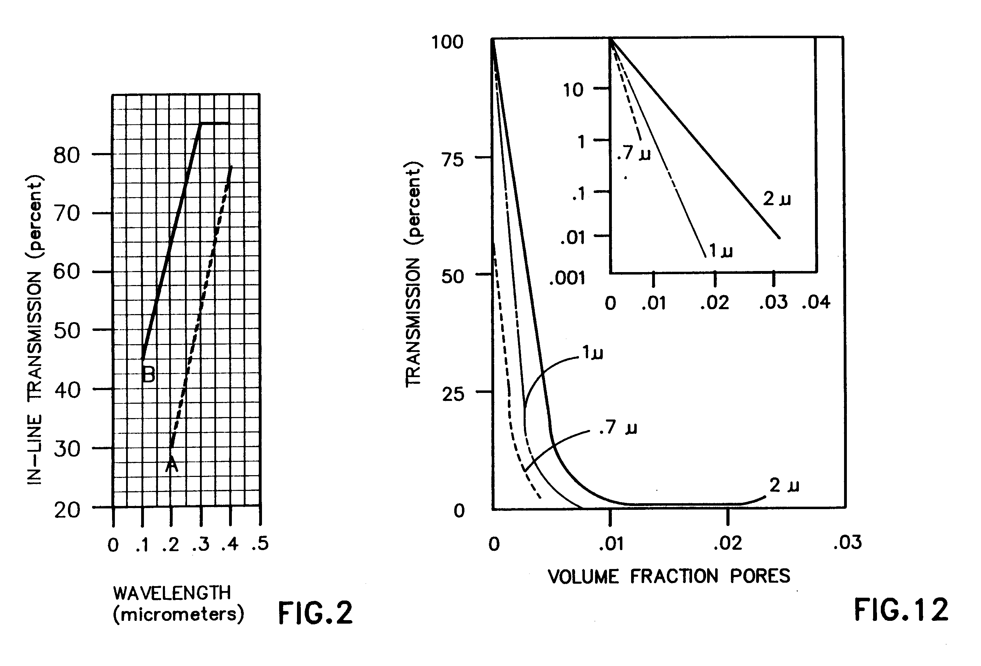

In accordance with the present invention, we provide a polycrystalline body of magnesia-alumina spinel having a high in-line transmittance and, particularly, a transmittance equal to or greater than that depicted by line B in Figure 2 of the accompanying drawings.

The material retains at least about 90 percent and preferably at least about 99 percent of its original transmissivity after 240 hours exposure to ultraviolet light having a wavelength in the range 0.2 to 0.4 microns, it has a flexural strength of at least about (15,000 psi) 103 MPa, preferably at least about 139 MPa (20,000 psi) and, most preferably, at least about 193 MPa (28,000 psi).

The sintered transparent polycrystalline spinel bodies of this invention are produced by a two-step process involving forming a closed porosity body in a first step and reducing residual porosity in a second step. In the first step a powdered magnesia-alumina spinel, preferably having less than 0.005 weight percent of certain impurities, is formed into a closed porosity body, e.g. by hot pressing or pressureless sintering. The closed porosity body is then hot isostatic pressed at a temperature of at least about 1400°C under a pressure of at least about 103 MPa (15,000 psi). The sintered body produced by this method has a grain size less than about 150 microns, and a porosity less than about 0.001 percent.

In general, increased hardness and strength characteristics are associated with smaller grain sizes. A body which is transparent in the ultraviolet region as well as having the desired strength in general involves producing a body with grain sizes of about 150 microns. Substantially larger grain sizes in general result in reduced strength, while substantially smaller grain sizes in general results in unacceptable ultraviolet transmission.

The invention is further described with reference to the accompanying drawings, in which:

Fig. 1 illustrates the in-line transmission of polycrystalline bodies made according to the present invention;

Fig. 2 depicts the transmission curves of Fig. 1 in greater detail;

Fig. 3 illustrates spectral transmission curves of single crystal and hot pressed spinel bodies made by methods other than those of the present invention;

Fig. 4 illustrates spectral transmission curves of calcium aluminate glasses;

Fig. 5 illustrates spectral transmission curves of quartz crystal and silica and fused silica glass;

Fig. 6 illustrates spectral transmission curves of MgO and $MgF_2$;

Fig. 7 illustrates spectral transmission curves of zinc alumino germanate and germanate glasses;

Fig. 8 illustrates spectral transmission curves of $SrF_2$, $BaF_2$, and zinc sulfide;

Fig. 9 illustrates spectral transmission curves of sapphire, AlON, and yttria;

Fig. 10 illustrates spectral transmission curves of a number of samples of material made according to the present invention;

Fig. 11 depicts a phase diagram for the $MgO-Al_2O_3$-spinel system;

Fig. 12 illustrates a relationship between optical transmission and porosity used to obtain porosity from measurements of optical transmission;

Fig. 13 is a schematic perspective view of a missile dome produced in accordance with the present invention;

Fig. 14 is a cross-sectional view taken along Line 14-14 of Fig. 13;

Fig. 15 is a top plan view of the dome depicted in Fig. 13;

Fig. 16 is a perspective view of a launch tube window formed in accordance with the present invention;

Fig. 17 is a cross-sectional view taken along Line 17-17 of Fig. 16;

Fig. 18 is a top plan view of the launch tube window of Fig. 16; and

Fig. 19 is a schematic cross-sectional view of a missile having a dome and residing in a launch tube having a window.

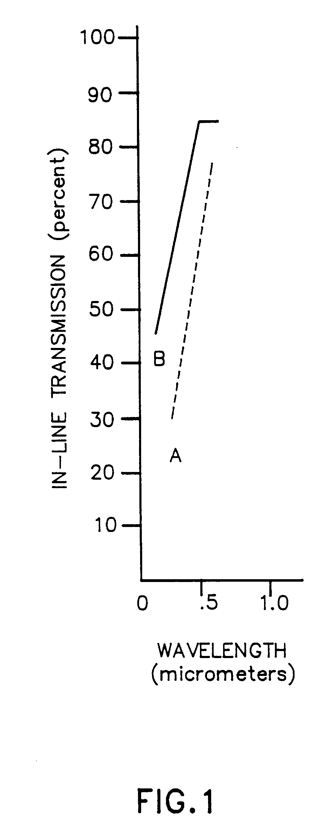

As already indicated, in accordance with the present invention, there is provided a transparent, sintered polycrystalline body of magnesia-alumina spinel, which is highly transparent, particularly to ultraviolet light having wavelengths in the range 0.2 to 0.4 micrometers, that is to say an in-line transmittance (percent per 1.88 mm thickness) greater than or equal to the transmittance depicted by line B in Figs. 1 and 2. The sintered bodies of the present invention also have good transmittance in the infrared wavelength region, having an in-line transmittance per 1.88 mm thickness at all wavelengths from 3 microns to 5 microns of not less than 73 percent, preferably not less than about 76 percent, and, at all wavelengths from about 3 microns to 4 microns of not less than about 81 percent, preferably not less than about 84 percent.

The body preferably has, in its uncoated state and with a thickness of about 1.88 mm, a transmittance not less than 85 percent in all wavelengths from 0.3 to 0.8 micrometers and not less than bout 72 percent at some wavelength from 0.2 to 0.3 micrometers. Further, the body preferably has a transmittance not less than about 73 percent in all wavelengths from about 3 microns to about 5 microns and has a transmittance of at least bout 86 percent at some wavelength from about 0.2 to about 0.4 micrometers. The body preferably has, in its uncoated state and with a thickness of about 1.88 mm, a transmittance greater than about 30 percent, preferably grater than 40 percent, and most preferably greater than about 45 percent, at a wavelength of about 0.2 microns and a transmittance greater than about 84 percent and preferably greater than about 85 percent at a wavelength of about 0.4 microns.

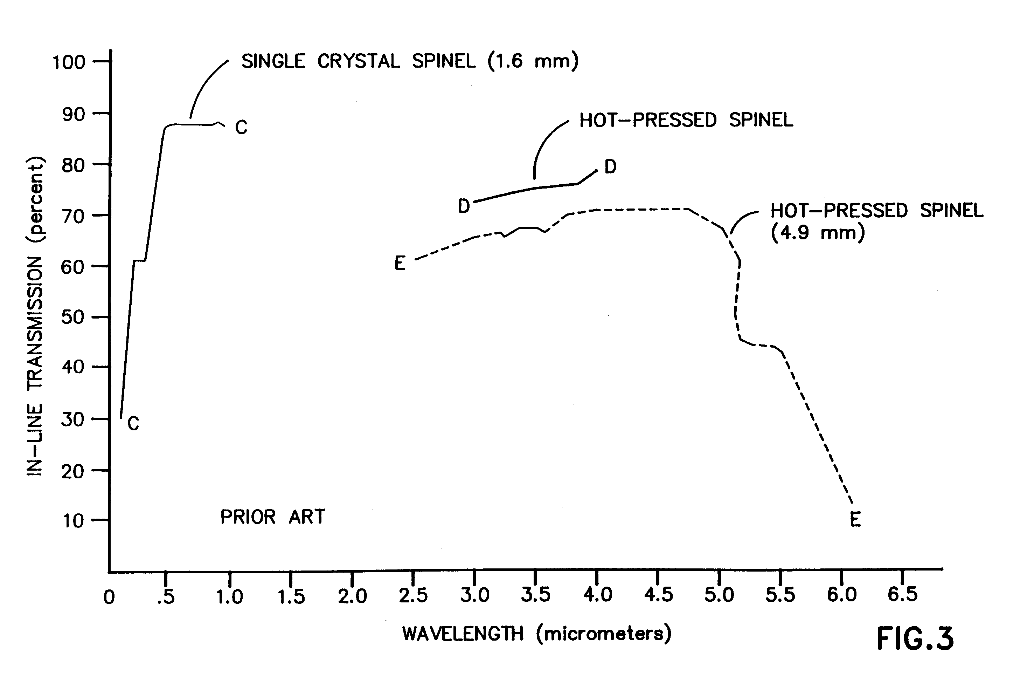

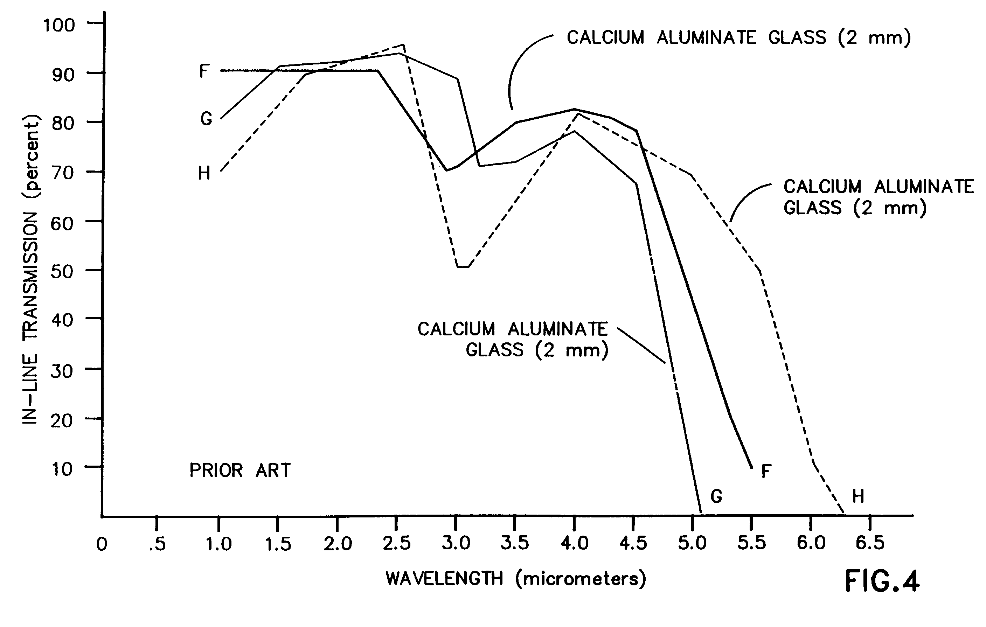

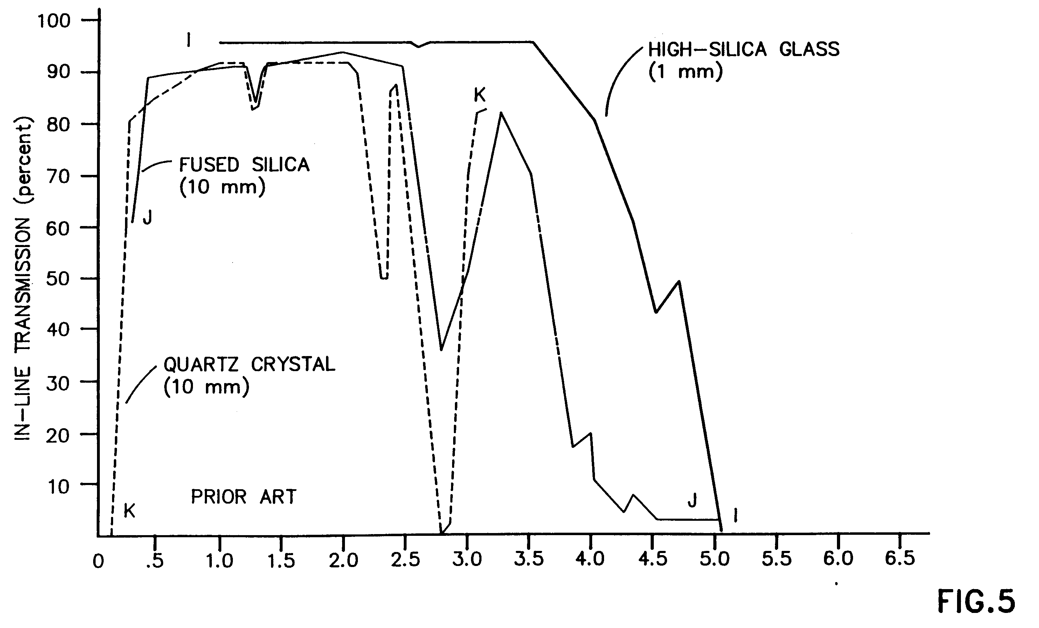

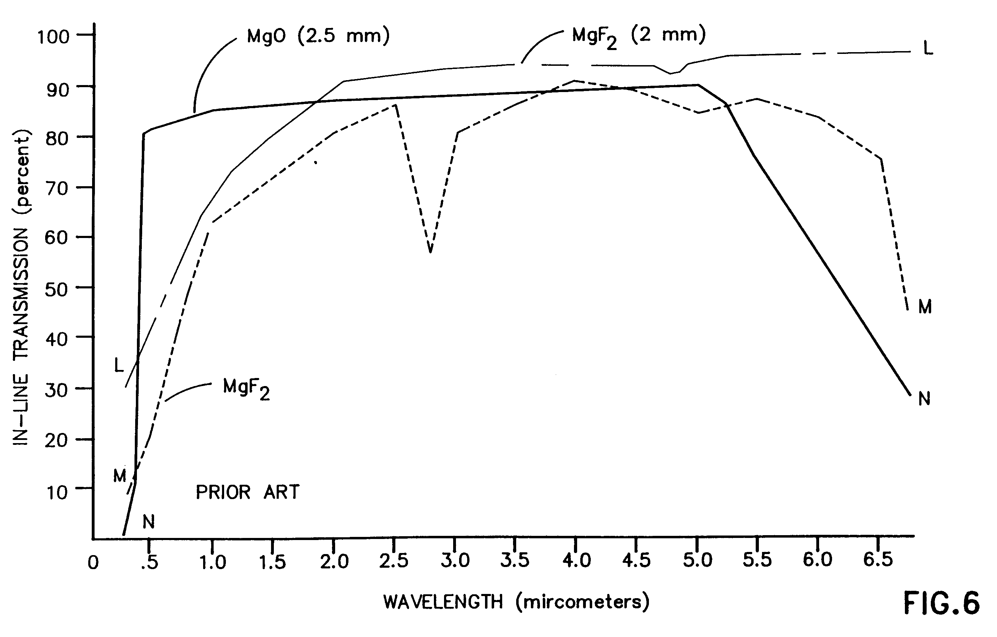

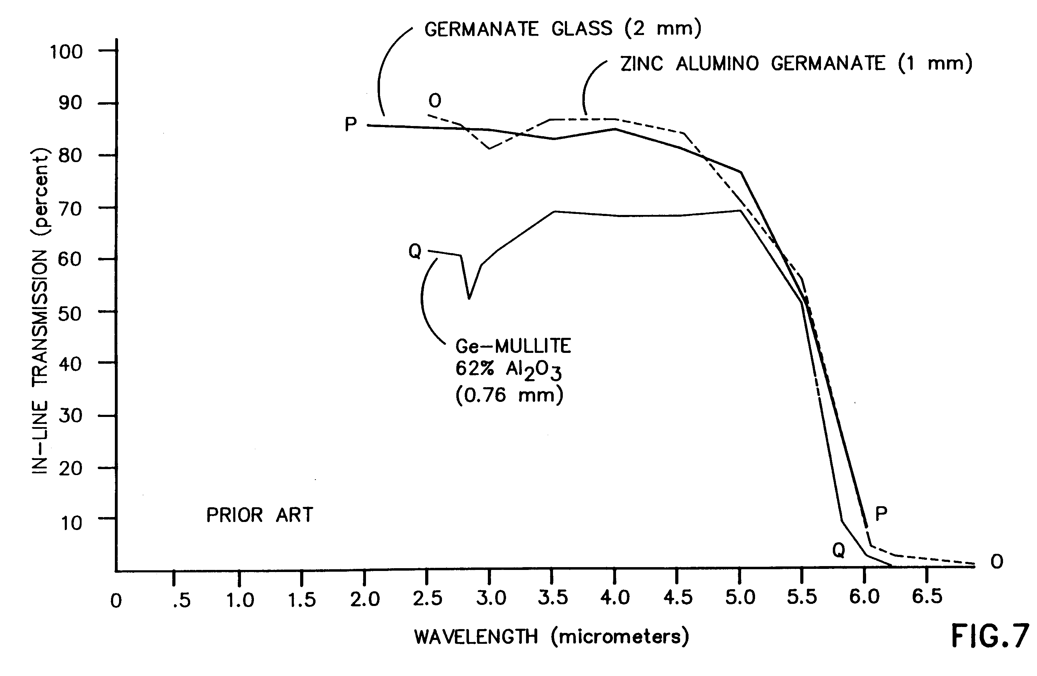

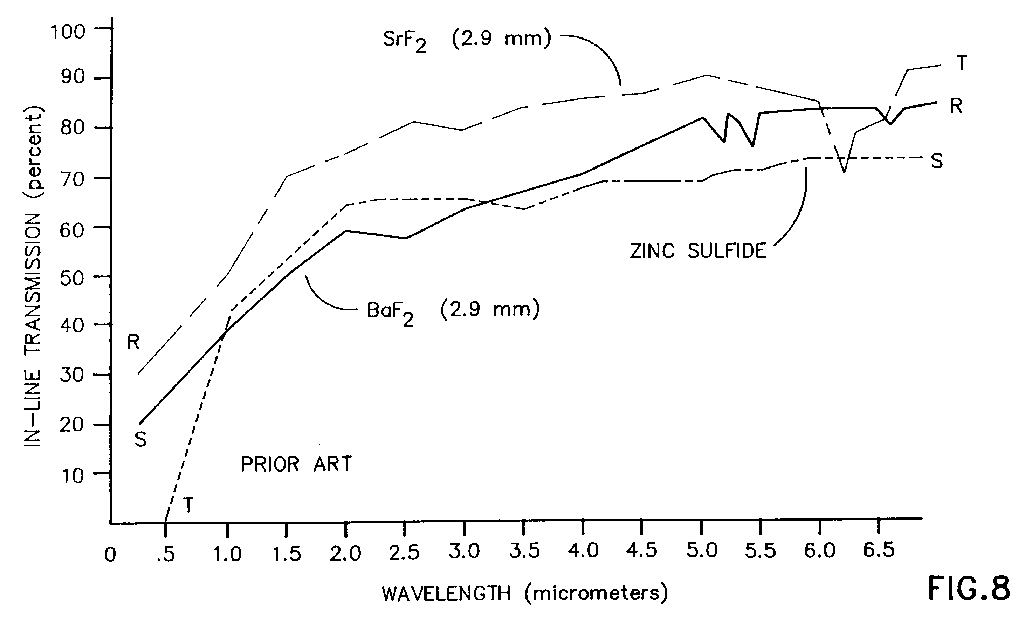

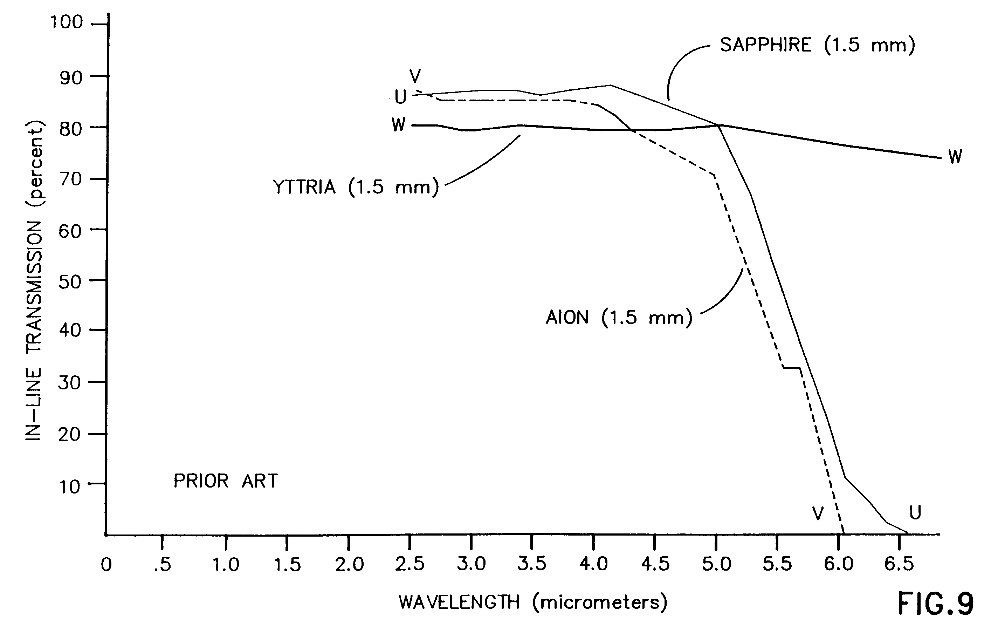

Lines C through E of Fig. 3, provided for the purposes of comparison, depict transmittance reported for spinel bodies produced by previous methods. Lines F through W of Figs. 4-9 depict transmittances reported for sintered bodies made of non-spinel materials as described in Table 1, and are provided for comparison purposes.

Table 1

| Curve | Fig. | Material | Thickness (mm) |
|---|---|---|---|
| C | 3 | single-crystal spinel | 1.6 |
| D | 3 | hot-pressed spinel | --- |
| E | 3 | hot-pressed spinel | 4.9 |
| F | 4 | calcium-aluminate glass | 2 |
| G | 4 | calcium-aluminate glass | 2 |
| H | 4 | calcium-aluminate glass | 2 |
| I | 5 | high-silica glass | 1 |
| J | 5 | fused silica | 10 |
| K | 5 | quartz crystal | 10 |
| L | 6 | $MgF_2$ | 2 |
| M | 6 | $MgF_2$ | --- |
| N | 6 | MgO | 2.5 |
| O | 7 | zinc alumino germanate | 1 |
| P | 7 | germanate glass | 2 |
| Q | 7 | Ge-mullite 62% $Al_2O_3$ | 0.76 |
| R | 8 | $SrF_2$ | 2.9 |
| S | 8 | $BaF_2$ | 2.9 |
| T | 8 | zinc sulfide | --- |
| U | 9 | sapphire | 1.5 |
| V | 9 | AION | 1.5 |
| W | 9 | yttria | 1.5 |

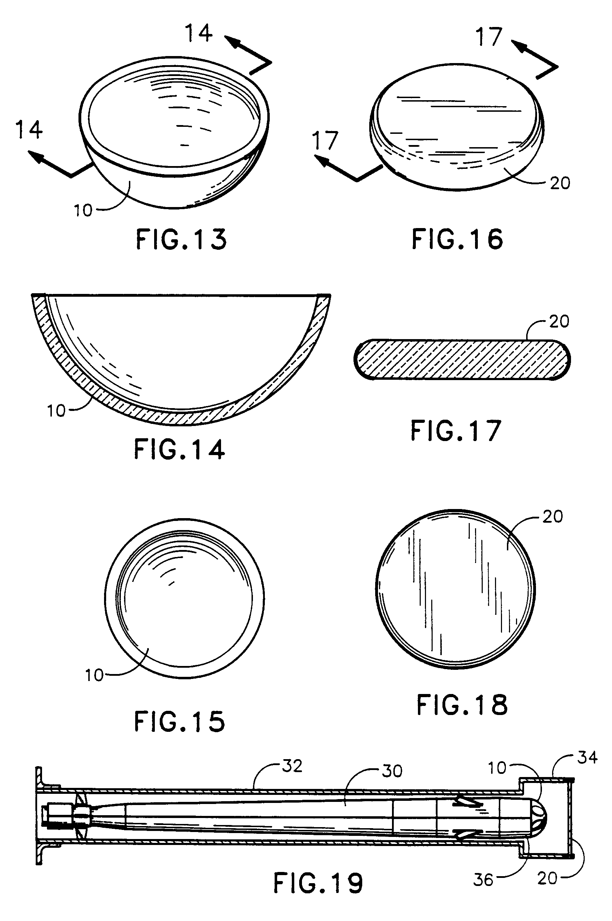

A sintered body produced according to the present invention comprises spinel and preferably contains more than about 99.9 weight percent spinel. Spinel is a useful material for optical applications such as instrument ports because, among other reasons, spinel is non-birefringent, has a cubic structure, and is substantially non-hygroscopic. The sintered transparent body has a porosity of less than 0.01 percent, preferably less than about 0.001 percent by volume and an average pore radius less than about 0.1 microns. Porosity in such low range is difficult to measure by ordinary displacement methods. Porosity can be measured using electron micrographs of the sintered body. Another method of determining porosity is to calculate porosity from measured light transmittance, e.g. by using the graphical relationship depicted in Fig. 12, which applies generally to material such as the material which is the subject of this invention.

The polycrystalline body of the present invention has a scatter of less than about $9x10^{-3}$, preferably less than about $8x10^{-3}$, and most preferably less than $7x10^{-3}$ at a wavelength of about 0.6 micrometers.

The sintered body can be polished to a scratch-dig size of less than about 20-20. The scratch-dig size of 20-20 represents a maximum scratch size of 0.020 mm (0.0008 inches) in width and a maximum dig size of 0.20 mm (0.008 inches) in diameter. In this context, a scratch is a defect which is long and thin in nature and a dig is a defect which is basically round. The meaning of scratch-dig size is explained fully in Mil-0-13830, pp. 32-34, Mil-0-13830 states:

Surface quality is specified by two numbers separated by a hyphen, e.g., 60-20. The first number is the maximum "scratch number" and the second number is the maximum "dig number." Scratches are classified as defects which are long and thin in nature, and digs are defects which are basically round. The smaller the number in both instances, the better the surface quality. Surface quality specifications should also integrate defects over the surface of the part. Therefore, looser tolerances should be considered for larger parts.

The sintered body has an average grain size less than about 150 microns. The sintered body has an average defect radius of less than about 0.12 mm (0.005 inches).

The sintered body of the present invention provides a relatively low emissivity in the infrared wavelength regions at elevated temperatures. High emissivities interfere with optics measurements and can be detrimental to optical guidance systems such as situations in which missile nose cones are aerodynamically heated during flight. Table 2 provides a comparison of emissivities of hot-pressed spinel with those of sapphire at various temperatures. Although the hot-pressed spinel represented in Table 2 is not made according to the claimed invention, since emissivities are primarily material-dependent, it is believed emissivities of spinel material made in accordance with the present invention has emissivities no greater than about those shown in Table 2 for hot-pressed spinel.

Table 2

| Emissivity at 4.5 and 5.0 Microns | | | | |
|---|---|---|---|---|
| Temp. (°C) | Emissivity at 4.5 microns | | Emissivity at 5.0 microns | |
| | spinel | sapphire | spinel | sapphire |
| 30 | 0.078 | 0.051 | 0.157 | 0.199 |
| 200 | 0.091 | 0.074 | 0.203 | 0.268 |
| 400 | 0.118 | 0.119 | 0.280 | 0.370 |
| 600 | 0.151 | 0.168 | 0.361 | 0.477 |
| 800 | 0.194 | 0.229 | 0.461 | 0.587 |
| 1000 | 0.247 | 0.311 | 0.559 | 0.686 |
| 1200 | 0.303 | 0.381 | 0.664 | 0.777 |
| 1400 | 0.381 | 0.468 | 0.788 | 0.848 |

The sintered body of the present invention has a flexural strength, measured according to the ASTM F417 test, measured at 25°C, of at least about 103 MPa (15,000 psi), preferably at least about (138 MPa) (20,000 psi), and most preferably at least about 158 MPa (23,000 psi). The sintered body has a tensile strength, measured according to the ACMA #4 test of at least about 83 MPa (12,000 psi). The material, however, is not so strong that it will resist bursting at a desired level. The sintered body of the present invention, when provided in a 7.5 cm (3 inch) diameter disk having a thickness of about 1.5 mm (0.06 inches), bursts when subjected to a pressure of more than about (0,18 MPa) (25 psi).

The sintered body of the present invention is resistant to abrasion or erosion, and particularly, when subjected to dust, sand or water droplets at a velocity of about 500 meters per second, undergoes substantially no degradation of transmittance properties. The sintered body of the present invention has a Knoop hardness, measured according to the ASTM E18 test of greater than 13244 MPa (1350 kg/mm$^2$), preferably greater than 14715 MPa (1500 kg/mm$^2$) and most preferably about 16677 MPa (1700 kg/mm$^2$).

The sintered body of the present invention is resistant to degradation under high temperature conditions and, in particular, has a high melting point, preferably above 2000°C.

The sintered body of the present invention is stable under exposure to ultraviolet light, and particularly, experiences a loss of transmissivity of less than about 1 percent after being subjected to sunlight or at a distance of about 15 cm (6 inches) to ultraviolet radiation of an intensity of about 700 microwatts/cm$^2$ having a wave length of about 0.254 micrometers for about 240 hours.

The sintered body of the present invention is chemically and thermally stable. The polycrystalline material of the present invention has a solubility of less than $10^{-3}$ g/100 g water at room temperature. The polycrystalline body has substantially no solubility in an acidic aqueous solution having a pH of between about 7 and about 2. There is substantially no degradation of the body upon exposure to oxidizing materials and there is substantially no degradation of the body upon exposure to temperatures of about 500°C. In this context, substantially no degradation means that the strength, hardness and optical qualities of the material are substantially preserved. In particular, upon exposure to oxidizing materials or to temperatures of about 500°C, the body possesses a Knoop hardness of at least about 10182 MPa (1038 kg/mm$^2$), flexure strength of at least about 10 MPa (1,500 psi), and in-line transmittance per 1.88 mm thickness in all wavelengths in the wavelength range from about 0.2 micrometers to about 0.4 micrometers of not less than the transmittance shown by Line A in Fig. 2.

For comparison purposes, Table 3 shows a number of physical properties reported for other optical materials.

Table 3

| | 4-point Flexure Strength (MPa) | Knoop Hardness 20°C (kg/mm$^2$) | Fracture Strength (MPa) | 550-450°C Resistance to Thermal Stress (K/E) | 750°C Resistance to Thermal Shock (w/cm) | Tensile Strength (MPa) | Thermal Conductivity ($10^{-4}$ cal./cm sec °C) | Melting or Softening Temperature (°C) |
|---|---|---|---|---|---|---|---|---|
| Previous hot-pressed spinel | 103 | 1390 | 193 | 11 | 10 | 110 | 330 | 2135 |
| MgF$_2$ | 100 | 576 | 151 | 3.2 | 9 | | | 1255 |
| MgO | 140 | 900 | 158 | 8 | 11 | | 600 | 2800 |
| Al$_2$O$_3$ | | 2200 | 344 | 21 | | | 600 | 2030 |
| Y$_2$O$_3$ | 160 | 800 | 193 | 7 | | | | |
| ZnS | | 356 | 103 | 6 | | | | |
| Fusion-cast spinel | 175 | 1750 | | | | | | |
| Alpha Si$_3$N$_4$ | | 2400 | | | | | | |
| AlON | 305 | 1950 | 206 | | | | | 2140 |
| Germinate glass | | 460 | | | | | | |

For purposes of comparison, absorption coefficients of other materials are given in Table 4, in which "HP" indicates hot-pressed.

7

## Table 4

### Absorption Coefficients (cm$^{-1}$)

| | | | Wavelength (microns) | | | |
|---|---|---|---|---|---|---|
| Material | 3.0 | 4.0 | 4.5 | 5.0 | 5.5 | 6.0 |
| **Temperature = 17-25°C** | | | | | | |
| Spinel (HP) | .0007 | .0332 | .135 | .465 / -.8 | 1.16 / -2 | 3.07 |
| Sapphire | .0013 | .061 | .252 | .81 | 2.07 | 5.66 |
| AlON | | | .5 | 1.6 | | |
| Zirconia | | | | | 0.5 | 1.5 |
| Yttria | .0001 | .0003 | .0021 | .001 | .037 | .11 / -.15 |
| **Temperature = 127°C** | | | | | | |
| Spinel (HP) | .0010 | .046 | .186 | .614 | 1.51 | 3.38 |
| Sapphire | .0019 | .083 | .333 | 1.6 | 2.63 | 6.95 |
| Yttria | .001 | .0006 | .0038 | .0017 | .061 | .186 |
| **Temperature = 227-250°C** | | | | | | |
| Spinel (HP) | .0015 | .0646 | .243 | .7-.802 | 1.95-2.3 | 4.74 |
| Sapphire | .0028 | .113 | .437 | 1.3-1.4 | 3.3-3.4 | 8.48 |
| AlON | | | 0.9 | 2.4 | | |
| Zirconia | | | | | 0.9 | 2.4 |
| **Temperature = 477-500°C** | | | | | | |
| Spinel (HP) | .0038 | .135 | .475 | 1.3-1.46 | 3.4-3.7 | 7.68 |
| Sapphire | .0069 | .233 | .826 | 2.1-2.46 | 5.1-5.65 | 13.38 |
| AlON | 1.3 | 3.7 | | | | |
| Zirconia | | | | | 2.0 | 4.5 |
| Yttria | .0001 | .003 | .019 | .072 | .23 | 0.6 |

## Table 4 (cont.)

### Absorption Coefficients (cm⁻¹)

Wavelength (~~microns~~) *micrometers*

| Material | 3.0 | 4.0 | 4.5 | 5.0 | 5.5 | 6.0 |
|----------|-----|-----|-----|-----|-----|-----|
| | | | Temperature = 727°C | | | |
| Spinel (HP) | .008 | .244 | .809 | 2.35 | 5.3 | 11.19 |
| Sapphire | .014 | .417 | 1.38 | 2.93 | 8.6 | 19.15 |
| Yttria | .00011 | .009 | 0.42 | .15 | .45 | 1.13 |

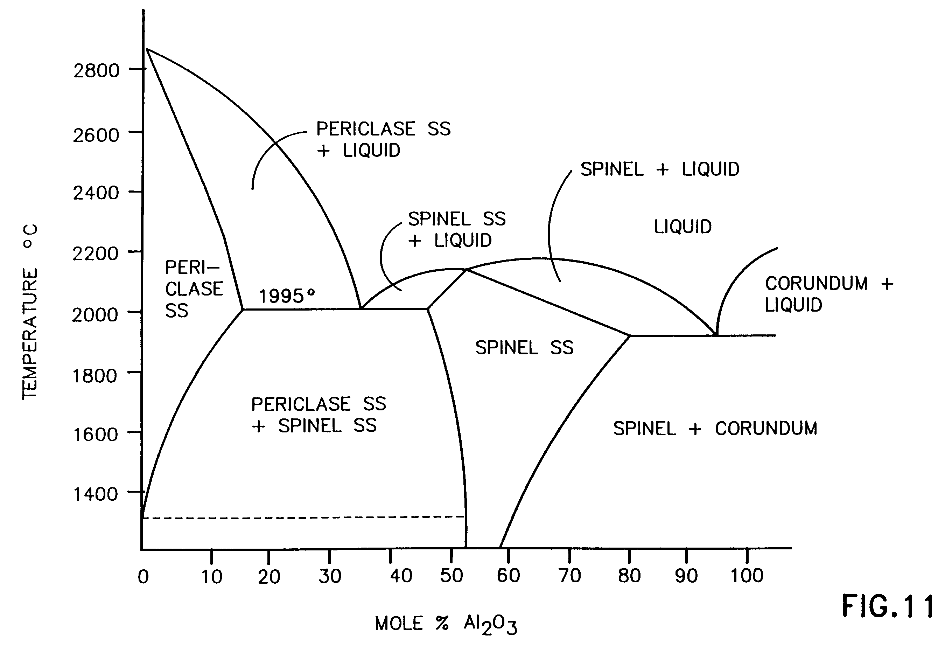

The method preferred for producing the transparent sintered body will now be described. According to the method of the present invention, a magnesia-alumina spinel powder is provided. The spinel powder is of high purity, and particularly, has less than about 5 ppm by weight, preferably less than 3 ppm, of oxides of any of the following elements: Cr, Cu, Fe, Ga, Mn, Pb, Ti, V, Zn, and has less than 50 ppm, preferably less than 30 ppm of the total of all the above oxides. The powder preferably has less than 1,000 ppm, preferably less than 10 ppm of carbon, less than 10 ppm, preferably less than 5 ppm of calcium, less than 30 ppm, preferably less than 5 ppm of sodium, less than 500 ppm, preferably less than 100 ppm of sulfur, less than 1,000 ppm, preferably less than 50 ppm of silicon. The magnesia-alumina powder is a mixture of a powder of MgO and a powder of $Al_2O_3$. The mixture can be in any weight ratio of $Al_2O_3$ to MgO approximately falling in the range indicated by "spinel SS" in Fig. 11. Preferably, the molar ratio of $Al_2O_3$ to MgO in the powder is about 1:1 plus or minus about 5 M/O. The powder preferably has a surface area of between about 10 and about 25 m²/g, preferably between about 15 m²/g and about 20 m²/g. The average particle size of the powder is substantially submicron and preferably between 40 and 50 weight percent of the particles have a diameter less than about 1 micron.

The powder is used to form a closed porosity body. The formation of a closed porosity body is used in connection with the subsequent hot isostatic pressing step because hot isostatic pressing requires the ability to establish an elevated isostatic (usually gas) pressure outside the body, compared to the pressure in the body, e.g., the pressure of gas in the pores of the body. It is usually inconvenient to envelope or coat the body with a gas-impermeable material before hot isostatic pressing. Therefore, formation of a closed porosity body (i.e., a body in which substantially no internal pores are in communication with the external atmosphere) is used to permit establishing an external pressure substantially in excess of internal pressure during the hot isostatic pressing step, as described below.

The formation of a closed porosity body can be accomplished by hot pressing or pressureless sintering. According to the hot pressing method, the powder is mixed with an amount of hot-pressing aid, e.g., between about 0.5 weight percent and about 3 weight percent, preferably about 1-1/2 weight percent of LiF.

A suitable powder can be obtained by processing in a mortar and pestal or milling, for example, in a vibroenergy mill. Total mortar and pestal or mill time is preferably about 1 to 10 hours with the $MgAl_2O_4$ and LiF added in batches. The mortar and pestaled or milled $MgAl_2O_4$ is screened preferably through a non-metallic screen at about a 35 to 100 mesh screen size.

The mixed powder is loaded in a hot press die. The powder compacts substantially upon pressing. The thickness desired for the hot pressed parts preferably will include an allowance for grinding. For example, a finished (0.3 inch) 8 mm thick disk may require the addition of about (0.3 mm) (0.015 inch) for grind allowance.

The hot press die may be made of graphite, for example, in the form of a cylindrical annulus. A cylindrical bottom die is placed in the bottom of the hot press die. All surfaces of the dies which will be exposed to the spinel are coated with a graphite foil.

According to one method of hot pressing, a single window is produced for each hot pressing operation. According to another hot pressing method, a number of windows are hot pressed simultaneously such as by vertically stacking two or more layers of spinel powder, separated by a parting medium such as graphite or boron nitride. When several windows are hot pressed simultaneously, the spinel layers are preferably separated by graphite spacers sufficiently thick to prevent fracture of the spacers. Spacers of about 1.2 cm (1/2 inch) thickness layered with 0.3-1.1 mm graphite foil are operable, although thinner spacers may also be operable. Products can be produced in a number of shapes including disks and domes.

After the powder and any parting medium is placed into the die, a top punch is placed into the top of the die. For disks, the top punch is a cylindrically-shaped punch and for domes, the top punch is preferably a male punch.

The prepared and filled die is cold pressed at about 0.7 MPa (100 psi). The cold-press pressure must be sufficient to provide for ease of handling and also assists in slightly compacting the powder prior to placing the die in the main press. The cold press pressure must not, however, be so high that closed porosity results.

The cold-pressed body can be treated to fully or partially remove volatile impurities by heating the body (at about 20°C per minute) to about 1100°C to about 1300°C, preferably about 1200°C at a reduced pressure, preferably less than 100 micrometers Hg pressure, for about 30 minutes. Alternatively, the impurities can be removed during the step of forming closed porosity.

After cold pressing, the die is placed in a quartz cylinder, separated therefrom by an insulating material such as graphite felt. The cold pressed bodies in the die are then subjected to hot pressing. The hot press step can be achieved in an inert gas atmosphere, but is preferably conducted under a vacuum. The actual vacuum which is achieved during hot pressing will depend in part upon the rate at which impurities or other materials out-gas. Apparatus capable of producing about 60 microns of vacuum will suffice. Note that in the discussion that follows with regard to the hot press step, the temperatures are those measured at the top surface of the die by a direct optical method. These temperatures are not necessarily equal to the temperatures of the spinel. Before any pressure is applied, the die is first heated to about 1125°C. Heating is preferably achieved by an induction heating method. The spinel is held at about 1125°C for about 30 minutes. The pressure and temperature are then both linearly increased over a period of about 1 to 5 hours. The rate of temperature rise and the rate of pressure rise are approximately 5°C per minute and 0.07 MPa (10 psi) per minute, respectively, and are selected such that the target temperature is never reached substantially before the target pressure is reached. For disks, the target temperature is at least about 1400°C, preferably about 1410°C and normally not above about 1480°C. The target pressure is at least about 14 MPa (2000 psi), preferably about 15 MPa (2200 psi). For domes, the target temperature is at least about 1395°C and preferably about 1460°C, and the target pressure is at least about about 14 MPa (2000psi), preferably about about 22 MPa (3200 psi). A temperature which is too high will result in a substantial amount of sublimation of the spinel. A temperature which is too low may result in decreased transparency of the product. Pressures higher than the target pressure are believed to be operable but cause excessive wear of the dies. Pressures lower than the target pressure result in compaction less than that desired and inferior optical clarity. During hot pressing, the spinel normally loses about 3 1/2 weight percent to sublimation.

The spinel is held at the target pressure and temperature for a period of time. The period of time for disks is about 2 to 5 hours. The period of time for domes is about 4 hours.

Following holding at the target temperature and pressure, the heating and pressure are reduced. Cooling occurs in about 12 to 14 hours. When domes are being pressed, after the die has cooled to about 1000°C, it is preferred to reduce the vacuum and to fill the die with a noble gas such as argon.

Another method for producing a closed porosity body is by pressureless sintering. Pressureless sintering, as compared to a hot press process, permits easier control of grain growth during the closed porosity formation step and is more useful in formation of parts having complex geometry. Hot-pressing is, in general, not as suitable for formation of complex-geometry parts. According to this method, the spinel powder is mixed with an amount of binder such as about 5 weight percent of carbowax, and may optionally also be mixed with materials such as surfactants, or lubricants, such as neofat. The powder mix is then compressed at substantially room temperature or is slip cast at room temperature to produce a green body. The green body is then exposed to a temperature, such as greater than about 1800°C preferably at substantially sub-atmospheric pressure, e.g., about 0.7 MPa (100 psi). The atmosphere during said pressureless sintering can be hydrogen or vacuum.

The closed porosity body typically has some amount of residual porosity. The hot pressed body typically has a porosity of about 0.01 volume percent or more. The pressureless sintered body typically has porosity of about 1 volume percent or more. In order to produce a body with the desired characteristics, the body is subjected to a second treatment step to reduce or eliminate the residual porosity. According to the present invention, the second step is a hot isostatic pressure treatment. The closed-porosity bodies are preferably inspected for visually-apparent defects and for minimum ultraviolet transmission such as about 65-85 percent transmission of an ultraviolet source having an intensity peak at a wavelength of about 0.25 microns. The parts, preferably separated by graphite spacers, are loaded into a hot-isostatic pressing chamber. The hot isostatic treatment includes heating the body to a target temperature of about 1500°C to 2000°C, preferably less than about 1800°C, and preferably at least about 1500°C. Heating can be accomplished by a resistance heater furnace. The maximum temperature is achieved in an atmosphere which has been pressurized to at least about 103 MPa) (15,000 psi), preferably more than 172 MPa (25,000 psi), and most preferably at least about 203 MPa (29,500 psi). The hot isostatic pressure atmosphere is preferably argon or helium. A number of rates of pressurization and heating and depressurization and cooling are operable. In one preferred embodiment, the chamber is pressurized to about 34 MPa (5,000 psi) without heating. The temperature and pressure are then increased linearly such that the target temperature and target pressure are arrived at essentially simultaneously. The heating is at a rate of between about 5°C per minute and about 25°C per minute, preferably about 15°C per minute. The target temperature and target pressure are maintained for a period between about 1/2 hour and about 5 hours, preferably about 2-1/2 hours. In general, there is an inverse relationship between temperature and hold time, i.e., at higher temperatures, a shorter hold time will be operable. After the hold time or "soak" period, a controlled cool-down is used. The pressure is decreased linearly during the cool-down period at such a rate that when the temperature reaches 600°C the pressure will be about 69 MPa (10,000 psi). The preferred cooling rate is about 5°C per minute down to the temperature of 600°C. Too rapid cooling, such as more than about 15°C per minute, may cause thermal shock. After a temperature of 600°C has been achieved, the furnace is turned off. The pressure, during this period, is decreased linearly at a rate such that when the temperature is 300°C, the pressure is about 48 MPa (7,500 psi). At this point, the pressure is allowed to freely vent to the atmosphere and the parts are allowed to cool to a temperature at which they can be handled. Normally, there will be no weight loss of the spinel parts during the hot-isostatic pressing procedure.

In one embodiment of the process, the two steps of the process are accomplished without substantial cooling of the body between steps. According to this method, a formed but unfired compact is sintered to a closed porosity state in a vessel at about atmospheric pressure in an $H_2$ atmosphere or a sub-atmospheric pressure in a vacuum atmosphere, and at a temperature of about 1400°C. Because this process does not require a hot-press step to form the closed porosity body, it can be used in formation of bodies having complex geometry. Hot press techniques are generally not suitable for forming complex geometry bodies. After the compact is sintered to a closed porosity state, the vessel is pressurized to at least about 138 MPa) (20,000 psi), without substantial cooling of the body, at a temperature of at least about 1400°C to accomplish the hot isostatic pressure step of the process and reduce or eliminate residual porosity of the body. In this context, "without substantial cooling" includes maintaining the temperature above about 1000°C, preferably above about 1300°C.

Following the hot isostatic pressing step, the body is cooled and is subjected to further steps to modify the surface characteristics of the body. These further steps can include grinding and polishing, application of an anti-reflection coating and metallizing.

The grain size in the finished body is thought to be related to both the strength characteristics and the optical characteristics of the sintered body. The exact parameters of these relationships and methods for controlling grain size are not well understood. However, without wishing to be bound by any theory, it is presently believed that grain size is generally inversely related to the strength of the sintered body but is directly related to transmission characteristics at shorter wavelengths, such as ultraviolet wavelengths. In other words, it is believed that larger grain sizes produce more favorable ultraviolet characteristics but cause a decrease in the strength characteristics of the sintered body. It is also believed that the grain size of the finished body is affected by a number of factors, especially including the hot press conditions, such as soak temperature and soak time, but also, it is believed, being influenced by such factors as cooling rates, such as hot isostatic pressing cooling rates and by powder stoichiometry. It has been found that in spite of the antagonistic constraints on grain size produced by various desired qualities of the finished product, and in spite of the lack of exact knowledge regarding the numerous factors which effect grain size, a finished sintered body with the desired range of properties, particularly strength properties and transmission properties, can be produced by the described process.

The transparent body is particularly useful as an optical element in electro-optical systems that will be exposed to extreme environments such as high-abrasion, high-heat, high-stress or high-corrosion environments. Applications include missile or guided artillery components including guidance system components such as domes, windows, lenses, and prisms, as well as armor and fuse covers. The process of this invention can be used to produce bodies having a number of useful characteristics, including those described above. However, it is possible the process of this invention can produce bodies having other characteristics so that the characteristics above may but do not necessary characterize the process.

According to the present invention, there is also provided a missile dome and a launch tube window comprised of the sintered polycrystalline magnesia-alumina spinel body described above produced by the method described above. The domes and windows produced according to the present invention comprise spinel and preferably contain more than about 99.9 weight percent spinel.

The domes and windows of the present invention have the advantages of the various properties discussed above for the sintered polycrystalline magnesia-alumina spinel body. These properties include, but are not limited to, non-birefringence, cubic structure, non-hygroscopicity, low porosity, low scatter, high polishability, low grain size, low average defect radius, low emissivity in infrared wavelength regions at elevated temperatures, high flexural strength, high tensile strength, resistance to abrasion and erosion, high Knoop hardness, high melting point, stability under exposure to ultraviolet light, and chemical and thermal stability.

The configuration, i.e., the size and shape of the body produced by the above-described process, will depend on the particular application contemplated. Referring to Fig. 13, a dome 10 can be provided in a number of configurations. As depicted in Figs. 13 and 14, and particularly in contemplation of use of the dome in connection with the stinger-post missile, the dome 10 is preferably in the form of a sector of a spherical shell. The outer radius of the finished dome 10 is preferably about (1.350 inches) 3,4 cm) and the inner radius is preferably about 3,3 cm (1.297 inches) to provide a dome thickness of about 1.3 mm (0.053 inches).

As depicted in Fig. 16, the launch tube window 20 is preferably 8,5 cm (3.350 inches) in diameter and 1,62 millimeters (0.064 inches) in thickness. The thickness of the widnow 20 is selected to provide for the desired rupturing of the window upon launch. A thicker window 20 will, in general, withstand a higher over-pressure before rupturing occurs. The window 20 preferably has rounded edges as depicted in Figs. 17 and 18 or, alternatively, rounded edges.

Referring to Fig. 19, the missile 30 is provided with a dome 10 beneath which is mounted sensing instrumentation (not shown), for example, infrared and/or ultraviolet guidance or tracking sensing instrumentation. The launch tube 32 is a generally cylindrically-shaped tube sealed at both ends. The end of the launch tube 34 which is adjacent to the nose end 36 of the missile 30 is sealed by the launch tube window 20. By using the launch tube end 32 to provide a sealed environment for the missile 30, the missile components are preserved in relative cleanliness to prevent deterioration of the missile operating parts which would result from exposure to environmental contaminants. The missile 30 is intended to be launched by aiming the launch tube 32 towards the target to allow the optical guidance system of the missile 30 to receive optical radiation from the target through both the launch tube window 20 and the missile dome 10. In connection with this launching mode, the launch tube window 20 must have transmittance properties at the ultraviolet and infrared wavelength regions in order to permit the missile guidance system to receive optical radiation whale the missile 30 is still in the launch tube 32.

Because the launch tube window 20 and the dome 10 are exposed to sunlight and thus to ultraviolet radiation during transport and use, the launch tube window 20 and dome 10 must retain infrared and ultraviolet transparency properties as well as strength and hardness properties under conditions of exposure to light, such as ultraviolet light.

Missile launch includes two phases. During the first phase, gases are released in the launch tube 32, producing over-pressure within the sealed launch tube sufficient to rupture the launch tube window 20. An eject motor launches the missile 30 through the now-opened end 34 of the launch tube 32. When the missile 30 is a safe distance from the gunner, a booster motor accelerates the missile to the desired speed. The missile 30 continues its flight, guided towards the intended target by the guidance system, which senses radiation through the dome 10. The dome 10 is exposed to great pressure and stress during the launch and flight owing to the accelaration of the launch, spin, abrasion by dust particles, water droplets and the like. The dome 10 produced according to this invention preserves the necessary transmittance characteristics in the face of such erosion and preserves its integrity in the face of the stress and acceleration endured during launch and flight.

EXAMPLES

Example 1

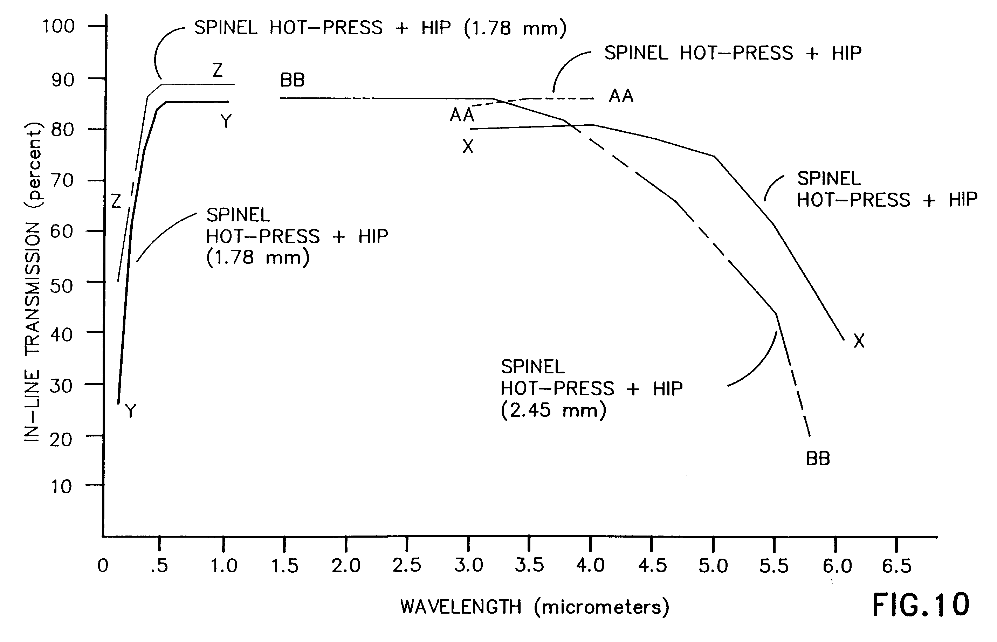

Three sintered bodies of magnesia-alumina spinel were formed and the properties thereof tested. All three bodies were formed from a powder having less than 5 parts per million by weight of oxides of any of Cr, Cu, Fe, Ga, Mn, Pb Ti, V, and Zn and having less than 50 ppm of the total of all the above oxides. The powder had less than 1000 ppm of carbon and less than 10 ppm of calcium, less than 30 ppm sodium, less

EP 0 447 390 B1

than 500 ppm sulfur, less than 1000 ppm silicon. The molar ratio of $Al_2O_3$ to MgO was 1:1. The average particle size was submicron. The powder was mixed with 1 1/2 weight percent LiF. The powder was loaded in a graphite die and cold-pressed at about 0.7 MPa (100 psi). The cold-pressed body was hot pressed at a temperature of about 1410°C with a uniaxial pressure of about 15 MPa (2200psi) with a "soak" of 5 hours. After cooling, the bodies were hot isostatically pressed at a temperature of 1500°C and a pressure of 203 MPa (29,500 psi). After cooling, the bodies were polished. Transmission spectra characteristic of the three bodies are shown in Fig. 10.

Example 2

Bodies of calcium aluminate glass and bodies of spinel, the latter formed according to the process of the invention, as described in Example 1, were subjected to sunlight and an artificial ultraviolet light source, Model UVL-56 manufactured by Ultra-Violet, Inc. of San Gabriel, California, for periods of time indicated in Table 5. The transmission of the bodies at a wavelength of about 0.254 microns is also shown in Table 5 before such exposure to ultraviolet light and after such exposure to ultraviolet light.

Table 5

| Type of Body | Length of Exposure (hours) | Light Source | Transmission Before U.V. Exposure | Transmission After U.V. Exposure |
|---|---|---|---|---|
| Calcium-aluminate glass | 2 | Sunlight | 70 | 45 |
| | 1/4 | Artificial* | 70 | 68 |
| Spinel | 244 | Sunlight | 78 | 78 |
| | 115 | Artificial* | 78 | 76 |

Example 3

To assess the damage from sand erosion, samples of material formed according to the present invention, along with plexiglass and window glass were mounted on a rotating table and blasted with 4,54 kg (10 pounds) of abrasive grit. The percent haze after the test was measured using an integrating sphere. The results are shown in Table 6.

Table 6

| Material | Percent Haze After Sandblast Test |
|---|---|
| Spinel - Hot press + HIP | 8 |
| Plexiglass - 1 | 79 |
| Plexiglass - 2 | 74 |
| Window Glass | 82 |

Example 4

The Agile Rain Erosion Test, as described in Memo REG. 4062-137-72 "Rain Erosion Test of Proposed Dome Materials" was performed on the material produced according to the present invention as well as a number of other materials including $MgF_2$, $CaF_2$, Yttrium-Aluminum-Garnet, MgO, and two glasses, Vycor 7913 and Corning 1723. The materials were placed in a sample holder and attached to an accelerated sled achieving the velocities indicated in Table 7. Results of the test are shown in Table 7. Table 8 shows the resistance to damage of the materials tested in order of relative effectiveness.

13

Table 7

| Material | Thickness of $Al_2O_3$ Coating (microns) | Run No. | Velocity (km per hr/fps) | Description |
|---|---|---|---|---|
| Spinel-hot-press + HIP | None | 1 | 29/1600 | No appreciable damage |
| | None | 3 | 25.5/1400 | No damage |
| | None | 4 | 29/1600 | No damage |
| $MgF_2$ | None | 1 | 29/1600 | Completely shattered |
| | None | 2 | 29/1600 | Completely shattered |
| | None | 3 | 25.5/1400 | One surface crack |
| | None | 4 | 29/1600 | Complete breakage |
| | 2.1 | 4 | 29/1600 | Surface cracks with coating deterioration |
| | 3.9 | 4 | 29/1600 | Coating slightly deteriorated |
| $CaF_2$ | None | 1 | 29/1600 | Slight pitting with surface cracks & fractures throughout although sample intact |
| | None | 2 | 29/1600 | Surface cracks with pitting |
| | None | 4 | 29/1600 | Surface cracks with slight pitting |
| | 2.1 | 4 | 29/1600 | Coating gone - slight pitting with surface cracks |
| MgO | None | 1 | 29/1600 | Surface cracks |
| | None | 2 | 29/1600 | Complete breakage |

Table 7 (Cont.)

| Material | Thickness of $Al_2O_3$ Coating (Microns) | Run No. | Velocity (km per hr/fps) | Description |
|---|---|---|---|---|
| Sapphire | None | 2 | 29/1600 | Single line fracture |
| | None | 3 | 25.5/1400 | No damage |
| Yttrium-Aluminium-Garnet | None | 1 | 29/1600 | Single line fracture |
| | None | 3 | 25.5/1400 | No damage |
| Corning 1723 | | 2 | 29/1600 | Completely shattered |
| | | 3 | 25.5/1400 | Pitting with surface cracks |
| VyCor 7913 | | 2 | 29/1600 | Completely shattered |
| | | 3 | 25.5/1400 | Surface pitting with one surface crack |

Table 8

| Agile Rain Erosion Test Resistance to Damage (In Order of Relative Effectiveness) | |
|---|---|
| 1 | Spinel; Hot-press + HIP |
| 2 | Sapphire |
| 3 | Yttrium-Aluminium-Garnet |
| 4 | $MgF_2$ with coating |
| 5 | $CaF_2$ with coating |
| 6 | MgO |
| 7 | $CaF_2$ |
| 8 | $MgF_2$ |
| 9 | VyCor 7913 |
| 10 | Corning 1723 |

**Claims**

1. A transparent, sintered, polycrystalline body of magnesia-alumina spinel, characterised in that the in-line transmittance (percent per 1.88 mm thickness) of the body for all wavelengths in the range 0.2 to 0.4 $\mu$m is not less than that given by line B in Fig. 2 of the accompanying drawings.

2. A transparent, sintered, polycrystalline body according to claim 1, characterised in that the body has a flexural strength at 25°C of at least 15000 psi (103 MPa), a Knoop hardness of at least 1350 kg/mm and a tensile strength of at least 12000 psi (83 MPa).

3. A transparent, sintered, polycrystalline body according to claim 1 or 2, characterised in that the body has an average grain size of less than 150 $\mu$m.

15

EP 0 447 390 B1

**4.** A transparent, sintered, polycrystalline body according to claim 1, 2 or 3, characterised in that the body has an average pore radius of less than 0.1 $\mu$m, a scatter at a wavelength of 0.6 $\mu$m of less than 9 x $10^{-3}$, a polish capability to a scratch dig size of less than 20-20, insolubility in acid solutions having pH values down to 2, and thermal stability at temperatures up to 500°C.

**5.** A transparent, sintered, polycrystalline body according to any one of claims 1 to 4, characterised in that the in-line transmittance (percent per 1.88 mm thickness) of the body for all wavelengths of light in the range 3 to 5 $\mu$m is at least 73%.

**6.** A process for the production of the transparent, sintered, polycrystalline bodies of magnesia-aluminium spinel claimed in claim 1, or any one of claims 2 to 5, characterised by the steps of forming a closed porosity body from a powdered magnesia-alumina spinel, and heating the closed porosity body to a temperature of at least 1400°C under an applied pressure of at least 20,000 psi (138 MPa) thereby to reduce the residual porosity of the said closed porosity body.

**7.** A process according to claim 6, characterised in that the closed porosity body is formed from a high purity powdered magnesia-alumina spinel, said high purity spinel powder containing less than 50 ppm, total, of oxides of chromium, copper, iron, gallium, manganese, lead, titanium, vanadium and zinc.

**8.** A process according to claim 6 or 7, characterised in that, prior to the formation of the closed porosity body, the said powder is first heated to a temperature in excess of 1100°C at atmospheric pressure or less to reduce impurity levels in the spinel powder.

**9.** A process according to claim 6, 7 or 8, characterised in that the said closed porosity body is formed by hot pressing the spinel powder at a temperature in excess of 1400°C and at a pressure in excess of 20,000 psi (138 MPa).

**10.** A process according to claim 6, 7 or 8, characterised in that the said closed porosity body is formed by sintering the powder at a temperature in excess of 1800°C at atmospheric pressure or less.

**11.** A process according to claim 9 or 10, characterised in that the closed porosity body is maintained continuously at a temperature of at least 1100°C in between the completion of the first step, i.e. the formation of that body, and the commencement of said second step.

**12.** A process according to any one of claims 6 to 11, characterised in that, in the said second step, the closed porosity body is heated to said temperature of at least 1400°C at the rate of from 5 to 20°C per hour.

**13.** A process according to any one of claims 6 to 12, characterised in that, in the said second step, the closed porosity body is heated at said temperature of at least 1400°C and at said applied pressure of 20,000 psi (138 MPa) for at least half an hour.

**14.** A process according to any one of claims 6 to 13, characterised in that at the end of the heat treatment step the ceramic body is allowed to cool slowly to 600°C at a rate not exceeding 15°C/min.

**15.** A dome for a missile guidance system, that dome consisting of or comprising a transparent, sintered, polycrystalline body of magnesia-alumina spinel as claimed in any one of claims 1 to 5.

**16.** A dome according to claim 15, characterised in that the said body itself is dome shaped and constitutes substantially the whole of said dome.

**17.** A dome according to claim 15, wherein the said body comprises but a sector of the said dome.

**18.** A guided missile having an optical guidance system at least partially covered by a transparent dome, wherein said dome is a dome as claimed in claim 15, 16 or 17.

**19.** A window for a missile launch tube, said window consisting of or comprising a transparent, sintered, polycrystalline body of magnesia-alumina spinel as claimed in any one of claims 1 to 5.

16

**20.** A missile launch tube incorporating a window according to claim 19.

**Patentansprüche**

**1.** Transparenter, gesinterter, polykristalliner Körper Von Magnesiumoxid-Aluminiumoxid-Spineil, **dadurch gekennzeichnet,** daß die In-line-Lichtdurchlässigkeit (Prozente je 1,88 mm Dicke) des Körpers für alle Wellenlängen im Bereich von 0,2 bis 0,4 $\mu$m nicht geringer als jene ist, die durch Linie B in Fig. 2 der beiliegenden Zeichnung gegeben ist

**2.** Transparenter, gesinterter, polykristalliner Körper nach Anspruch 1, **dadurch gekennzeichnet,** daß der Körper eine Biegefestigkeit bei 25 °C von wenigstens 15 000 psi (103 MPa), eine Knoop-Härte von wenigstens 1350 kg/mm und eine Zugfestigkeit von wenigstens 12 000 psi (83 MPa) hat.

**3.** Transparenter, gesinterter, polykristalliner Körper nach Anspruch 1 oder 2, **dadurch gekennzeichnet,** daß der Körper eine mittlere Komgröße von weniger als 150 $\mu$m hat.

**4.** Transparenter, gesinterter, polykristalliner Körper nach Anspruch 1, 2 oder 3, **dadurch gekennzeichnet,** daß der Körper einen mittleren Porenradius von weniger als 0,1 $\mu$m, eine Streuung bei einer Wellenlänge von 0,6 $\mu$m von weniger als 9 x $10^{-3}$, eine Polierbarkeit bis zu einer Kratztiefe von weniger als 20-20, Unlöslichkeit in Säurelösungen mit pH-Werten hinab bis 2 und Wärmebeständigkeit bei Temperaturen bis zu 500 °C hat

**5.** Transparenter, gesinterter, polykristalliner Körper nach einem der Ansprüche 1 bis 4, **dadurch gekennzeichnet,** daß die In-line-Lichtdurchlässigkeit (Prozente je 1,88 mm Dicke) des Körpers für alle Lichtwellenlängen im Bereich von 3 bis 5 $\mu$m wenigstens 73 % ist.

**6.** Verfahren zur Herstellung der transparenten, gesinterten, polykristallinen Körper von Magnesiumoxid-Aluminiumoxid-Spinell nach Anspruch 1 oder einem der Ansprüche 2 bis 5, **gekennzeichnet durch** die Stufen, in denen man einen Körper mit geschlossener Porosität aus einem pulverisierten Magnesiumoxid-Aluminiumoxid-Spinell bildet und den Körper mit geschlossener Porosität auf eine Temperatur von wenigstens 1400 °C unter einem angelegten Druck von wenigsten 20 000 psi (138 MPa) erhitzt und dabei die Restporosität dieses Körpers mit geschlossener Porosität vermindert.

**7.** Verfahren nach Anspruch 6, **dadurch gekennzeichnet,** daß der Körper mit geschlossener Porosität aus einem pulverisierten Magnesiumoxid-Aluminiumoxid-Spinell hoher Reinheit gebildet wird, wobei das Spinellpulver mit hoher Reinheit zusammengenommen weniger als 50 ppm Oxide von Chrom, Kupfer, Eisen, Gallium, Mangan, Blei, Titan, Vanadin und Zink enthält.

**8.** Verfahren nach Anspruch 6 oder 7, **dadurch gekennzeichnet,** daß vor der Bildung des Körpers mit geschlossener Porosität das Pulver zunächst auf eine Temperatur oberhalb 1100 °C bei Atmosphärendruck oder weniger erhitzt wird, um Verunreinigungsgehalte in dem Spinellpulver zu vermindern.

**9.** Verfahren nach Anspruch 6, 7 oder 8, **dadurch gekennzeichnet,** daß der Körper mit geschlossener Porosität durch Heißpressen des Spinellpulvers bei einer Temperatur oberhalb 1400 °C und bei einem Druck oberhalb 20 000 psi (138 MPa) gebildet wird.

**10.** Verfahren nach Anspruch 6, 7 oder 8, **dadurch gekennzeichnet,** daß der Körper mit geschlossener Porosität durch Sintern des Pulvers bei einer Temperatur oberhalb 1800 °C bei Atmosphärendruck oder weniger gebildet wird.

**11.** Verfahren nach Anspruch 9 oder 10, **dadurch gekennzeichnet,** daß der Körper mit geschlossener Porosität kontinuierlich auf einer Temperatur von wenigstens 1100 °C zwischen der Beendigung der ersten Stufe, d. h. der Bildung des Körpers, und dem Beginn der zweiten Stufe gehalten wird.

**12.** Verfahren nach einem der Ansprüche 6 bis 11, **dadurch gekennzeichnet,** daß in der zweiten Stufe der Körper mit geschlossener Porosität auf die Temperatur von wenigstens 1400 °C mit der Geschwindigkeit von 5 bis 20 °C je Stunde erhitzt wird.

**13.** Verfahren nach einem der Ansprüche 6 bis 12, **dadurch gekennzeichnet,** daß in der zweiten Stufe der Körper mit geschlossener Porosität auf die Temperatur von wenigstens 1400 °C und bei dem angelegten Druck von 20 000 psi (138 MPa) wenigstens eine halbe Stunde erhitzt wird.

**14.** Verfahren nach einem der Anspirüche 6 bis 13, **dadurch gekennzeichnet,** daß man am Ende der Hitzebehandlungsstufe den Keramikkörper langsam auf 600 °C mit einer Geschwindigkeit, die 15 °C/min nicht übersteigt, abkühlen läßt.

**15.** Kuppel für ein Flugkörperlenkungssystem, wobei die Kuppel aus einem transparenten, gesinterten, polykristallinen Körper von Magnesiumoxid-Aluminiumoxid-Spinell nach einem der Ansprüche 1 bis 5 besteht oder einen solchen umfaßt.

**16.** Kuppel nach Anspruch 15, **dadurch gekennzeichnet,** daß der Körper selbst kuppelförmig geformt ist und im wesentlichen die Gesamtheit der Kuppel bildet

**17.** Kuppel nach Anspruch 15, bei der der Körper nur einen Ausschnitt dieser Kuppel umfaßt

**18.** Gelenkter Flugkörper mit einem optischen Lenksystem, das wenigstens teilweise von einer transparenten Kuppel bedeckt ist, wobei diese Kuppel eine Kuppel nach Anspruch 15, 16 oder 17 ist.

**19.** Fenster für ein Flugkörper-Abschußrohr, wobei dieses Fenster aus einem transparenten, gesinterten, polykristallinen Körper von Magnesiumoxid-Aluminiumoxid-Spinell nach einem der Ansprüche 1 bis 5 besteht oder einen solchen umfaßt.

**20.** Flugkörper-Abschußrohr mit einem Fenster nach Anspruch 19.

**Revendications**

**1.** Corps polycristallin transparent fritté, constitué d'un spinelle d'oxyde de magnésium-oxyde d'aluminium, caractérisé en ce que le facteur de transmission linéaire (pourcentage pour 1,88 mm d'épaisseur) du corps pour toutes les longueurs d'onde allant de 0,2 à 0,4 $\mu$m n'est pas inférieur aux valeurs indiquées par la ligne B de la figure 2 des dessins annexés.

**2.** Corps polycristallin transparent fritté selon la revendication 1, caractérisé en ce qu'il a une résistance à la flexion d'au moins 15 000 psi (103 MPa) à 25°C, une dureté Knoop d'au moins 1 350 kg/mm et une résistance à la traction d'au moins 12 000 psi (83 MPa).

**3.** Corps polycristallin transparent fritté selon la revendication 1 ou 2, caractérisé en qu'il a une grosseur moyenne de grains de moins de 150 $\mu$m.

**4.** Corps polycristallin transparent fritté selon la revendication 1, 2 ou 3, caractérisé en ce qu'il a un rayon moyen de pores de moins de 0,1 $\mu$m, une dispersion de moins de $9 \times 10^{-3}$ à la longueur d'onde de 0,6 $\mu$m, une capacité de polissage jusqu'à une dimension de rayure et de creux de moins de 20-20, est insoluble dans des solutions acides ayant des valeurs de pH descendant jusqu'à 2, et une stabilité thermique à des températures allant jusqu'à 500°C.

**5.** Corps polycristallin transparent fritté selon l'une quelconque des revendications 1 à 4, caractérisé en ce que le facteur de transmission linéaire (pourcentage pour 1,88 mm d'épaisseur) du corps est d'au moins 73 % pour toutes les longueurs d'onde de lumière allant de 3 à 5 $\mu$m.

**6.** Procédé de fabrication de corps polycristallins transparents frittés constitués d'un spinelle d'oxyde de magnésium-oxyde d'aluminium selon la revendication 1 ou l'une quelconque des revendications 2 à 5, caractérisé par les étapes consistant à former un corps à pores fermes a partir d'un spinelle pulvérulent d'oxyde de magnésium-oxyde d'aluminium et chauffer le corps à pores fermés à une température d'au moins 1 400°C en appliquant une pression d'au moins 20 000 psi (138 MPa) de façon à diminuer ainsi les pores résiduels dudit corps à pores fermés.

**7.** Procédé selon la revendication 6, caractérisé en ce que le corps à pores fermés est formé d'un spinelle pulvérulent très pur d'oxyde de magnésium-oxyde d'aluminium, ladite poudre très pure de spinelle contenant moins de 50 ppm, en tout, d'oxydes de chrome, de cuivre, de fer, de gallium, de manganèse, de plomb, de titane, de vanadium et de zinc.

**8.** Procédé selon la revendication 6 ou 7, caractérisé en ce que, avant la formation du corps à pores fermés, d'abord on chauffe ladite poudre à une température de plus de 1 100°C, à la pression atmosphérique ou moins, pour abaisser le taux d'impuretés dans la poudre de spinelle.

**9.** Procédé selon la revendication 6, 7 ou 8, caractérisé en ce qu'on forme le corps à pores fermés en pressant à chaud la poudre de spinelle, à une température de plus de 1 400°C et à une pression de plus de 20 000 psi (138 MPa).

**10.** Procédé selon la revendication 6, 7 ou 8, caractérisé en ce qu'on forme le corps à pores fermés en frittant la poudre à une température de plus de 1 800°C, à la pression atmosphérique ou moins.

**11.** Procédé selon la revendication 9, caractérisé en ce qu'on maintient le corps à pores fermés en continu à une température d'au moins 1 100°C entre la fin de la première étape, c'est-à-dire la formation de ce corps, et le début de ladite deuxième étape.

**12.** Procédé selon l'une quelconque des revendications 6 à 11, caractérisé en ce que, lors de la deuxième étape, le corps à pores fermés est chauffé à ladite température d'au moins 1 400°C, à la vitesse de 5 à 20°C par heure.

**13.** Procédé selon l'une quelconque des revendications 6 à 12, caractérisé en ce que, lors de la deuxième étape, le corps à pores fermés est chauffé à ladite température d'au moins 1 400°C, à ladite pression excercée, d'au moins 20 000 psi (138 MPa), pendant au moins une demi-heure.

**14.** Procédé selon l'une quelconque des revendications 6 à 13, caractérisé en ce qu'à la fin de l'étape de traitement thermique, on laisse refroidir lentement le corps de céramique jusqu'à 600°C, à une vitesse ne dépassant pas 15°C/min.

**15.** Dôme pour système de guidage de missiles, comprenant ou constitué d'un corps polycristallin transparent fritté constitué d'un spinelle d'oxyde de magnésium-oxyde d'aluminium tel qu'il est revendiqué dans l'une quelconque des revendications 1 à 5.

**16.** Dôme selon la revendication 15, caractérisé en ce que ledit corps lui-même a la forme d'un dôme et constitue pratiquement l'ensemble dudit dôme.

**17.** Dôme selon la revendication 15, dans lequel ledit corps constitue seulement un secteur dudit dôme.

**18.** Missile guidé ayant un système de guidage optique au moins partiellement recouvert par un dôme transparent, dans lequel ledit dôme est un dôme tel qu'il est revendiqué dans la revendication 15, 16 ou 17.

**19.** Fenêtre pour tube de lancement de missiles, ladite fenêtre comprenant ou étant constituée d'un corps polycristallin transparent fritté constitué d'un spinelle d'oxyde de magnésium-oxyde d'aluminium tel qu'il est revendiqué dans l'une quelconque des revendications 1 à 5.

**20.** Tube de lancement de missiles comprenant une fenêtre selon la revendication 19.

FIG.1

FIG.12

FIG.2

FIG.3

EP 0 447 390 B1

FIG.4

FIG.5

EP 0 447 390 B1

FIG.6

FIG.7

GERMANATE GLASS (2 mm)

ZINC ALUMINO GERMANATE (1 mm)

Ge-MULLITE
62% $Al_2O_3$
(0.76 mm)

PRIOR ART

IN-LINE TRANSMISSION (percent)

WAVELENGTH (micrometers)

FIG.8

EP 0 447 390 B1

FIG.9

EP 0 447 390 B1

FIG.10

EP 0 447 390 B1

FIG.11

EP 0 447 390 B1

FIG.13

FIG.16

FIG.14

FIG.17

FIG.15

FIG.18

FIG.19